(19) **Europäisches Patentamt** / **European Patent Office** / **Office européen des brevets**

(11) **EP 2 461 101 A1**

(12) # EUROPÄISCHE PATENTANMELDUNG

(43) Veröffentlichungstag:
06.06.2012 Patentblatt 2012/23

(51) Int Cl.:
*F23R 3/14* *(2006.01)*    *F23R 3/36* *(2006.01)*
*F02C 9/40* *(2006.01)*

(21) Anmeldenummer: 10193575.7

(22) Anmeldetag: 03.12.2010

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: Siemens Aktiengesellschaft
80333 München (DE)

(72) Erfinder:
• Kaufmann, Carsten
45478, Mülheim a.d. Ruhr (DE)
• Kock, Boris Ferdinand
40878, Ratingen (DE)
• Köstlin, Berthold
47057, Duisburg (DE)
• Meisl, Jürgen
45478, Mülheim an der Ruhr (DE)
• Teteruk, Rostislav
45468, Mülheim an der Ruhr (DE)

(54) **Brennereinrichtung für eine Gasturbinenanlage und Verfahren zum Betreiben einer derartigen Brennereinrichtung**

(57) Brennereinrichtung für eine Gasturbinenanlage und Verfahren zum Betreiben einer derartigen Brennereinrichtung

Die Erfindung betrifft eine Brennereinrichtung (2) für eine Gasturbinenanlage, umfassend einen Kanal zum Mischen von Luft und Brennstoff und mindestens eine im Kanal angeordnete Drallschaufel (1) mit ersten Bohrungen (5), die einer ersten Brennstoffzuführung (7) zugeordnet sind und einen ersten Bohrungsdurchmesser aufweisen, und zweiten Bohrungen (6), die einer zweiten Brennstoffzuführung (8) zugeordnet sind und einen zweiten Bohrungsdurchmesser aufweisen, der sich vom ersten Bohrungsdurchmesser unterscheidet, wobei eine Umschaltvorrichtung (13) vorgesehen ist, die einen Brennstoffstrom in Abhängigkeit eines Gasindexes des Brennstoffs vollständig zwischen der ersten (7) und zweiten Brennstoffzuführung (8) umschaltet. Die Erfindung betrifft ferner ein Verfahren zum Betrieb einer solchen Brennereinrichtung (2).

FIG 2

**Beschreibung**

Brennereinrichtung für eine Gasturbinenanlage und Verfahren zum Betreiben einer derartigen Brennereinrichtung

Die Erfindung betrifft eine Brennereinrichtung, insbesondere für eine Gasturbinenanlage, und bezieht sich auf die Einhaltung der $NO_x$-Emissionen mit nicht vorgewärmtem Erdgas und die Erweiterung der Wobbe-Index-Bandbreite. Die Erfindung betrifft ferner ein Verfahren zum Betrieb einer Brennereinrichtung.

Neueste Verbrennungssysteme zeichnen sich durch hohe Turbineneintrittstemperaturen bei niedrigen Stickoxidemissionen (< 15 ppm) aus. Um dies zu erreichen, wird jedoch eine bestimmte Vorwärmtemperatur des Erdgases benötigt. Bei einem Ausfall des Vorwärmsystems wird diese Grenze überschritten.

Weiterhin besteht der Bedarf nach einer möglichst hohen Qualitätsbandbreite (Wobbe-Index-Bandbreite) des verwendeten Erdgases.

Zur Einhaltung der $NO_x$-Emissionen mit kaltem Erdgas muss die Turbineneintrittstemperatur abgesenkt werden. Dies kann zu einer instabilen Verbrennung führen.

Bei einer deutlichen Abweichung des Wobbe-Index vom Auslegungswert ist ebenfalls häufig eine Absenkung der Turbineneintrittstemperatur notwendig.

Der Wobbe-Index W ist der Quotient aus dem Brennwert oder Heizwert H und der Quadratwurzel aus der relativen Dichte des Brenngases. Die relative Dichte ist der Quotient aus der Dichte des Brenngases $\rho$ und der Dichte trockener Luft $\rho_0$ unter Referenzbedingungen:

$$W = \frac{H}{\sqrt{\frac{\rho}{\rho_0}}}$$

Bei Gas- und Dampfkraftwerken wird zur Wirkungsgradsteigerung jedoch vermehrt das Brenngas auf Temperaturen bis über 200°C vorgewärmt, weshalb in die Formel die Gasdichte nicht bei Normbedingungen, sondern nur bei Normdruck und bei der tatsächlichen Betriebstemperatur angesetzt wird. Man spricht dann vom Gasindex. Ein konstanter Gasindex bedeutet, dass bei gleichbleibendem Energiestrom und damit gleichbleibender Gasturbinenleistung auch die Impulsstromdichte am Brenneraustritt konstant bleibt. Damit wird eine nahezu konstante Eindringtiefe des Gasstrahls gewährleistet, was für die Auslegung einer Vormischverbrennung von großer Bedeutung ist.

Aufgabe der Erfindung ist es, eine Brennereinrichtung für eine Gasturbinenanlage mit geringen $NO_x$-Emissionen und einer möglichst hohen Qualitätsbandbreite des verwendeten Erdgases und ein Verfahren zum Betreiben einer derartigen Brennereinrichtung anzugeben.

Bezogen auf die Vorrichtung wird die Aufgabe durch eine Brennereinrichtung für eine Gasturbinenanlage gelöst, umfassend einen Kanal zum Mischen von Luft und Brennstoff und mindestens eine im Kanal angeordnete Drallschaufel mit ersten Bohrungen, die einer ersten Brennstoffzuführung zugeordnet sind und einen ersten Bohrungsdurchmesser aufweisen, und zweiten Bohrungen, die einer zweiten Brennstoffzuführung zugeordnet sind und einen zweiten Bohrungsdurchmesser aufweisen, der sich vom ersten Bohrungsdurchmesser unterscheidet, wobei eine Umschaltvorrichtung vorgesehen ist, die einen Brennstoffstrom in Abhängigkeit eines Gasindexes des Brennstoffs vollständig zwischen der ersten und zweiten Brennstoffzuführung umschaltet.

Die Erfindung beruht demnach auf dem Gedanken, dass die $NO_x$-Bildung im Wesentlichen von der Homogenität der Gemischbildung und damit von der Eindringtiefe des Gasstrahls in die umgebende Luft bestimmt wird. Daher soll die Eindringtiefe möglichst konstant zu halten. Diese wird bei gegebener Düsengeometrie sowohl durch den Wobbe-Index des Gases als auch die Gastemperatur beeinflusst. Beides wird zusammengefasst in der Größe des Gasindex. Durch ein Konstanthalten des Gasindex bei gegebener Düsengeometrie können somit die Probleme der Erdgasvorwärmung als auch der Wobbe-Index-Bandbreite gleichermaßen adressiert werden.

Umgekehrt ist es auch möglich, bei einer Änderung des Gasindex die Düsengeometrie zu ändern.

Es ist vorteilhaft, wenn die Umschaltvorrichtung eine Ventileinrichtung ist, die in eine Brennstoffleitung geschaltet ist, von der die erste und die zweite Brennstoffzuführung abzweigen. Zweckmäßiger Weise ist die Ventileinrichtung ein Drei-Wege-Ventil.

In vorteilhafter Ausführung ist der Kanal ein Ringkanal mit einer radial inneren und einer radial äußeren Begrenzungswand und mehreren zwischen der inneren und der äußeren Begrenzungswand angeordneten Drallschaufeln, die mit der inneren Begrenzungswand bzw. der äußeren Begrenzungswand verbunden sind.

Zweckmäßigerweise umfasst die Brennereinrichtung weiterhin eine Brennstoffringleitung, von der die Brennstoffleitung abzweigt.

In einer vorteilhaften Ausführungsform ist der zweite Bohrungsdurchmesser kleiner als der erste Bohrungsdurchmesser, wobei die zweiten Bohrungen den ersten Bohrungen in Strömungsrichtung einer Kompressorluft nachgeschaltet sind.

Dabei liegen die ersten und zweiten Bohrungsdurchmesser zwischen 1 und 2 mm. Insbesondere betragen der erste Bohrungsdurchmesser 1,5 mm und der zweite Bohrungsdurchmesser 1,3 mm.

Im erfinderischen Verfahren zum Betrieb einer Brennereinrichtung mit einem Kanal zum Mischen von Luft und Brennstoff und mindestens einer im Kanal angeordneten Drallschaufel mit ersten Bohrungen, die gemeinsam mit Brennstoff versorgt werden, zum Eindüsen von Brennstoff in einen Luftstrom und mit zweiten Bohrungen, die gemeinsam mit Brennstoff versorgt werden und einen anderen Durchmesser als die ersten Bohrungen aufweisen, bei dem der Brennstoff über die ersten Bohrungen eingedüst wird, wird ein Brennstoffstrom in Abhängigkeit eines Gasindexes des Brennstoffs vollständig auf die zweiten Bohrungen umgeschaltet.

Vorteilhafter Weise wird dabei eine Eindringtiefe des Brennstoffs in den Luftstrom möglichst konstant gehalten.

Zweckmäßiger Weise werden zur Ermittlung des Gasindexes ein Wobbe-Index und eine Temperatur des Brennstoffs ermittelt.

Mit der Erfindung erfolgt eine automatische Umschaltung der Düsen bei einem Abfall der Vorwärmtemperatur des Erdgases, wodurch $NO_x$-Garantien eingehalten werden. Eine automatische Umschaltung der Düsengeometrie erfolgt mit der Erfindung auch bei einer Änderung der Gasqualität. Dies bewirkt eine Erhöhung der möglichen Bandbreite des Wobbe-Indexes.

Die Erfindung wird beispielhaft anhand der Zeichnungen näher erläutert. Es zeigen schematisch und nicht maßstäblich:

Figur 1     eine Schaufel mit zwei Bohrungsreihen und

Figur 2     eine Brennereinrichtung nach der Erfindung.

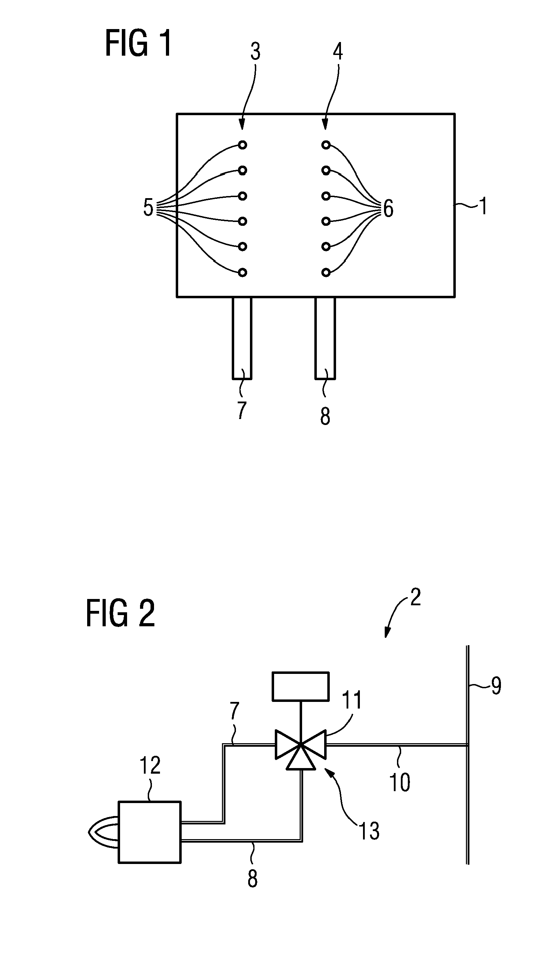

Die Figur 1 zeigt schematisch und beispielhaft eine Schaufel 1 einer Brennereinrichtung 2 (s. Figur 2) mit einer ersten 3 und einer zweiten Bohrungsreihe 4 mit ersten 5 und zweiten 6 Bohrungen unterschiedlicher Bohrungsdurchmesser zum Eindüsen von Brennstoff in einen Luftstrom, der in der Figur 1 von links nach rechts an der Schaufel 1 vorbeiströmt. Der Brennstoff wird separat über eine erste 7 und eine zweite Brennstoffzuführung 8 den ersten 5 und zweiten Bohrungen 6 zugeführt. Die Größe der ersten 5 und zweiten Bohrungen 6 liegt zwischen 1 und 2 mm. Beispielsweise beträgt die Größe der ersten Bohrungen 5 1,5 mm und die der zweiten Bohrungen 6 1,3 mm.

Figur 2 zeigt die Brennereinrichtung 2 nach der Erfindung. Von einer Ringleitung 9 zweigt eine Brennstoffleitung als Stichleitung 10 ab. Eine Umschaltvorrichtung 13, die ein Drei-Wege-Ventil 11 umfasst, das in der Stichleitung 10 angeordnet ist, schaltet die Brennstoffversorgung entweder vollständig auf die erste 7 oder die zweite Brennstoffzuführung 8, welche entsprechend die ersten 5 oder die zweiten Bohrungen 6 der Schaufeln 1 im Brenner 12 versorgen. Das Umschalten wird über den Wert des Gasindexes getriggert.

**Patentansprüche**

1.  Brennereinrichtung (2) für eine Gasturbinenanlage, umfassend einen Kanal zum Mischen von Luft und Brennstoff und mindestens eine im Kanal angeordnete Drallschaufel (1) mit ersten Bohrungen (5), die einer ersten Brennstoffzuführung (7) zugeordnet sind und einen ersten Bohrungsdurchmesser aufweisen, und zweiten Bohrungen (6), die einer zweiten Brennstoffzuführung (8) zugeordnet sind und einen zweiten Bohrungsdurchmesser aufweisen, der sich vom ersten Bohrungsdurchmesser unterscheidet, **dadurch gekennzeichnet, dass** eine Umschaltvorrichtung (13) vorgesehen ist, die einen Brennstoffstrom in Abhängigkeit eines Gasindexes des Brennstoffs vollständig zwischen der ersten (7) und zweiten Brennstoffzuführung (8) umschaltet.

2.  Brennereinrichtung (2) nach Anspruch 1, wobei die Umschaltvorrichtung (13) eine Ventileinrichtung (11) umfasst, die in eine Brennstoffleitung (10) geschaltet ist, von der die erste (7) und die zweite Brennstoffzuführung (8) abzweigen.

3.  Brennereinrichtung (2) nach Anspruch 2, wobei die Ventileinrichtung (11) ein Drei-Wege-Ventil ist.

4.  Brennereinrichtung (2) nach einem der vorhergehenden Ansprüche, wobei der Kanal ein Ringkanal mit einer radial inneren und einer radial äußeren Begrenzungswand und mehreren zwischen der inneren und der äußeren Begrenzungswand angeordneten Drallschaufeln (1) ist, die mit der inneren Begrenzungswand bzw. der äußeren Begrenzungswand verbunden sind.

5.  Brennereinrichtung (2) nach einem der Ansprüche 2 bis 4, weiter umfassend eine Brennstoffringleitung (9), von der die Brennstoffleitung (10) abzweigt.

6.  Brennereinrichtung (2) nach einem der vorhergehenden Ansprüche, wobei der zweite Bohrungsdurchmesser kleiner als der erste Bohrungsdurchmesser ist und die zweiten Bohrungen (6) den ersten Bohrungen (5) in Strömungsrichtung einer Kompressorluft nachgeschaltet sind.

7.  Brennereinrichtung (2) nach einem der vorhergehenden Ansprüche, wobei die ersten und zweiten Bohrungsdurchmesser zwischen 1 und 2 mm liegen.

8.  Brennereinrichtung (2) nach einem der vorhergehenden Ansprüche, wobei der erste Bohrungsdurchmesser 1,5 mm und der zweite Bohrungsdurchmesser 1,3 mm beträgt.

9.  Verfahren zum Betrieb einer Brennereinrichtung (2) mit einem Kanal zum Mischen von Luft und Brennstoff und mindestens einer im Kanal angeordneten Drallschaufel (1) mit ersten Bohrungen (5), die gemeinsam mit Brennstoff versorgt werden, zum Eindüsen von Brennstoff in einen Luftstrom und mit zweiten Bohrungen (6), die gemeinsam mit Brennstoff versorgt werden und einen anderen Durchmesser als die ersten Bohrungen (5) aufweisen, bei dem der Brennstoff über die ersten Bohrungen (5) eingedüst wird, **dadurch gekennzeichnet, dass** ein Brennstoffstrom in Abhängigkeit eines Gasindexes des Brennstoffs vollständig auf die zweiten Bohrungen (6) umgeschaltet wird.

**10.** Verfahren nach Anspruch 9, bei dem eine Eindringtiefe des
Brennstoffs in den Luftstrom möglichst konstant gehalten wird.

**11.** Verfahren nach einem der Ansprüche 9 oder 10, wobei zur
Ermittlung des Gasindexes ein Wobbe-Index und eine Temperatur des Brennstoffs ermittelt werden.

EP 2 461 101 A1

FIG 1

3    4

5    6    1

7    8

FIG 2

2

11
9

7
12    10
13

8

5

Europäisches
Patentamt

European
Patent Office

Office européen
des brevets

**EUROPÄISCHER RECHERCHENBERICHT**

**Nummer der Anmeldung**

EP 10 19 3575

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 161 502 A1 (SIEMENS AG [DE]) 10. März 2010 (2010-03-10) * Absätze [0004], [0013], [0015] * * Absätze [0022], [0035], [0037]; Abbildungen 1b, 3, 4 * | 1-11 | INV. F23R3/14 F23R3/36 F02C9/40 |
| Y | US 2008/083229 A1 (HAYNES JOEL MEIER [US] ET AL) 10. April 2008 (2008-04-10) * Absätze [0023], [0025], [0026] * * Absätze [0028], [0032], [0035] * * Absätze [0036], [0037], [0040]; Abbildungen 1-8 * | 1-11 | |
| A | EP 1 645 804 A1 (SIEMENS AG [DE]) 12. April 2006 (2006-04-12) * Absätze [0009], [0012] - Absatz [0014]; Abbildungen 1-3 * | 1,9-11 | |
| A | DE 10 2008 002941 A1 (GEN ELECTRIC [US]) 5. Februar 2009 (2009-02-05) * Absätze [0005], [0006], [0016] * | 1,9,11 | RECHERCHIERTE SACHGEBIETE (IPC) |
| A | US 6 904 873 B1 (ASHTON LARRY J [US]) 14. Juni 2005 (2005-06-14) * Spalte 1, Zeile 38 - Zeile 49 * * Spalte 3, Zeile 3 - Zeile 33; Abbildungen 1-3 * | 2,3 | F23R F02C |
| A | DE 10 2009 026400 A1 (GEN ELECTRIC [US]) 22. April 2010 (2010-04-22) * Absatz [0034]; Abbildungen 1, 4 * | 2,3 | |
| A | EP 2 204 563 A2 (GEN ELECTRIC [US]) 7. Juli 2010 (2010-07-07) * Absätze [0009], [0018], [0020], [ 0021] * * Absätze [0027], [0028], [0034], [ 0035]; Abbildungen 1-3 * | 1,5,9 | |

Der vorliegende Recherchenbericht wurde für alle Patentansprüche erstellt

| Recherchenort | Abschlußdatum der Recherche | Prüfer |
|---|---|---|
| Den Haag | 17. Juni 2011 | Harder, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

EP 2 461 101 A1

**ANHANG ZUM EUROPÄISCHEN RECHERCHENBERICHT**
**ÜBER DIE EUROPÄISCHE PATENTANMELDUNG NR.**

EP 10 19 3575

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2011

| Im Recherchenbericht angeführtes Patentdokument | Datum der Veröffentlichung | Mitglied(er) der Patentfamilie | Datum der Veröffentlichung |
|---|---|---|---|
| EP 2161502 A1 | 10-03-2010 | KEINE | |
| US 2008083229 A1 | 10-04-2008 | CA 2665319 A1<br>CN 101563533 A<br>EP 2074297 A2<br>JP 2010506131 T<br>KR 20090077765 A<br>WO 2008057685 A2 | 15-05-2008<br>21-10-2009<br>01-07-2009<br>25-02-2010<br>15-07-2009<br>15-05-2008 |
| EP 1645804 A1 | 12-04-2006 | AT 399964 T<br>CN 101040148 A<br>EP 1800060 A1<br>WO 2006040268 A1<br>ES 2308548 T3<br>JP 2008516178 T<br>US 2009120054 A1 | 15-07-2008<br>19-09-2007<br>27-06-2007<br>20-04-2006<br>01-12-2008<br>15-05-2008<br>14-05-2009 |
| DE 102008002941 A1 | 05-02-2009 | CH 697743 A2<br>CN 101358555 A<br>JP 2009036206 A<br>US 2009031731 A1 | 13-02-2009<br>04-02-2009<br>19-02-2009<br>05-02-2009 |
| US 6904873 B1 | 14-06-2005 | AU 2004237800 A1<br>AU 2008212067 A1<br>CA 2487258 A1<br>MX PA05000804 A<br>NZ 539286 A | 04-08-2005<br>02-10-2008<br>20-07-2005<br>20-09-2005<br>26-08-2005 |
| DE 102009026400 A1 | 22-04-2010 | CH 699761 A2<br>CN 101726004 A<br>JP 2010096488 A<br>US 2010095649 A1 | 30-04-2010<br>09-06-2010<br>30-04-2010<br>22-04-2010 |
| EP 2204563 A2 | 07-07-2010 | JP 2010156328 A<br>US 2010168980 A1 | 15-07-2010<br>01-07-2010 |

EPO FORM P0461

Für nähere Einzelheiten zu diesem Anhang : siehe Amtsblatt des Europäischen Patentamts, Nr.12/82

7